# EUROPEAN PATENT APPLICATION

(11) **EP 2 365 651 A2**
(43) Date of publication of application: **14.09.2011**
(21) Application number: 11156707.9
(22) Date of filing: 03.03.2011
(51) Int. Cl.: H04J 3/06

(54) **System and method for providing time synchronization**

(30) Priority: 11.03.2010 US 721904
(71) Applicant: General Electric Company, Schenectady, NY 12345 (US)
(72) Inventor: Alley, Daniel Milton, Earlysville, VA 22936 (US); Boettner, Fred Henry, Roanoke, VA 24018 (US)
(74) Representative: Bedford, Grant Richard

(57) **Abstract**

Systems (100,200) and methods (300,400) for providing time synchronization in a local network are provided. A time source (115,205) may be configured to determine a current time and a designated time at which a reference signal will be output, and to output the reference signal when the designated time is reached. A network host (105) communicatively coupled to the time source (115,205) may be configured to (i) identify the designated time and (ii) communicate (315) the identified designated time to one or more network devices (110a-n) via a local network (120). The one or more network devices (110a-n) may be respectively configured to (i) initiate an internal clock (143), (ii) receive the designated time from the network host (105), (iii) receive the reference signal output be the time source subsequent to receiving the designated time, and (iv) set a value of the internal clock (153) to the designated time upon receipt of the reference signal.

## Description

Various embodiments of the invention relate generally to time synchronization and more specifically to time synchronization in a local network.

Control systems are utilized in a wide variety of different applications. For example, control systems are utilized in conjunction with power generating devices, in power plants, and/or in process plants. A control system typically includes a central controller, various subsystems, and/or various subnetworks or local networks in communication with one another. For example, at a power plant, a central controller may be in communication with a plurality of local networks that respectively include Foundation Fieldbus devices. The Foundation Fieldbus devices may be configured to monitor various components of the power plant.

In order to provide accurate Sequence of Event (SOE) timing, it is desirable to include time synchronization in control systems in order to monitor and track events that are identified by various network components. Conventional systems typically communicate timing synchronization information or signals to various components via Ethernet packet switching. However, the communication of packet switching information typically cannot accurately support timing synchronization of relatively low bandwidth devices, such as relatively low bandwidth Foundation Fieldbus devices. Due to the protocol handshakes and the relatively slow processing components of the low bandwidth devices, an error may be introduced into timing information communicated via packet switching that is higher than a desired error for SOE timing.

Accordingly, improved systems and methods that facilitate time synchronization would be desirable, as well as improved systems and methods that facilitate time synchronization in a local network.

Some or all of the above needs and/or problems may be addressed by certain embodiments of the invention. Embodiments of the invention may include systems and methods for providing time synchronization. According to one embodiment of the invention, there is disclosed a system for providing time synchronization. The system may include a time source, a network host, and one or more network devices. The time source may be configured to determine a current time and a designated time at which a reference signal will be output, and to output the reference signal when the designated time is reached. The network host may be communicatively coupled to the time source and configured to (i) identify the designated time and (ii) communicate the identified designated time to one or more network devices via a local network. The one or more network devices may be respectively configured to (i) initiate an internal clock, (ii) receive the designated time from the network host, (iii) receive the reference signal output be the time source subsequent to receiving the designated time, and (iv) set a value of the internal clock to the designated time upon receipt of the reference signal.

According to another embodiment of the invention, there is disclosed a method for providing time synchronization. A time source that is configured to output a reference signal at a designated time may be identified by a network host device. The host device may then determine the designated time at which the reference signal will be output by the time source, and communicate an indication of the designated time to one or more network devices via a local network. The indication may be communicated prior to the designated time. The one or more network devices may be respectively configured to receive the indication and set, upon a subsequent receipt of the reference signal from the time source, a value of an internal clock to the designated time.

According to yet another embodiment of the invention, there is disclosed a method for providing time synchronization. An internal timing signal may be initiated by a network device. The network device may then receive, via a local network, an indication of a designated time at which a reference signal will be output by a time source. Subsequent to receiving the indication, the network device may receive the reference signal from the time source. Based at least in part on receiving the reference signal, a value of the internal timing signal may be set to the designated time.

Additional systems, methods, apparatus, features, and aspects are realized through the techniques of various embodiments of the invention. Other embodiments and aspects of the invention are described in detail herein and are considered a part of the claimed invention. Other embodiments and aspects can be understood with reference to the description and the drawings.

Having thus described the invention in general terms, reference will now be made to the accompanying drawings, which are not necessarily drawn to scale, and wherein:
FIG. 1 is a schematic diagram of one example system that may be utilized to provide time synchronization within a local network, accordance to an illustrative embodiment of the invention.
FIG. 2 is a schematic diagram of another example system that may be utilized to provide time synchronization within a local network, accordance to an illustrative embodiment of the invention.
FIG. 3 is a flow chart of one example method for providing time synchronization, according to an illustrative embodiment of the invention.
FIG. 4 is a flow chart of another example method for providing time synchronization, according to an illustrative embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

For purposes of this disclosure, the term "network device" may refer to a relatively low bandwidth network device that is connected to a local network. The relatively low bandwidth of the network device may make it difficult to maintain a relatively accurate time signal at the network device or to synchronize the time signal with other time signals via network based packet switching communications, such as Ethernet packet switching communications. For example, the delays generated by the relatively low bandwidth and/or processing speed of the network device may make it difficult to maintain an time signal that satisfies a desired resolution for Sequence of Event (SOE) timing, such as a desired resolution of approximately one (1) millisecond. One example of a suitable network device is an H1 Foundation Fieldbus device, although other network devices may be utilized in various embodiments of the invention.

Disclosed are control systems and methods for providing time synchronization. According to one embodiment of the invention, there is disclosed a system for providing time synchronization within a local network, such as a local network of Foundation Fieldbus devices or other relatively low bandwidth devices situated at a power plant or process plant. A time source, such as a global positioning system (GPS) time source, may be configured to determine a relatively accurate or precise current time. Additionally, the time source may be configured to output a reference signal at one or more designated times. For example, the time source may be configured to periodically output a reference signal at designated times, such as once a second, once every ten seconds, etc. A first network device, such as a network host device may incorporate or be in communication with the time source. The network host device may be configured or programmed to identify a next designated time at which a reference signal will be output by the time source, such as a next second that a reference signal will be output.

The network host may communicate the identified designated time or an indication of the designated time to one or more relatively low bandwidth network devices via a local network and prior to the designated time being reached. For example, the designated time may be communicated to one or more Foundation Fieldbus device via a suitable communications bus with a Foundation Fieldbus network. The time source may then output a reference signal, such as a ping signal, when the current time maintained by the time source reaches the designated time, and the reference signal may be received by each of the network devices. In certain embodiments, one or more designated signal lines, such as a designated bus line, may facilitate the communication of the reference signals to the network devices. In other embodiments, the reference signal may be superimposed or otherwise added to a signal that is propagated on a signal line within the bus. Once a network device receives the reference signal, a value of an internal timing signal (e.g., an internal clock) may be set or updated to the previously received designated time. In this regard, relatively accurate or precise time synchronization may be facilitated within a network of relatively low bandwidth devices. The time synchronization may facilitate relatively accurate time stamping of monitored events and/or Sequence of Event (SOE) timing may be maintained.

Various embodiments of the invention may include one or more special purpose computers, systems, and/or particular machines that facilitate time synchronization and/or SOE timing within a network, such as a local network that includes one or more relatively low bandwidth devices. A special purpose computer or particular machine may include a wide variety of different software modules as desired in various embodiments. As explained in greater detail below, in certain embodiments, these various software components may be utilized to facilitate time synchronization.

Certain embodiments of the invention described herein may have the technical effect of facilitating relatively accurate time synchronization within a network, such as a network that includes one or more relatively low bandwidth network devices. Additionally, certain embodiments of the invention may have the technical effect of facilitating relatively accurate Sequence of Event (SOE) timing within a control network, such as a control network at a power plant or process plant.

Various embodiments of the invention may incorporate relatively low bandwidth devices, such as Foundation Fieldbus-type (hereinafter "Fieldbus") devices into one or more networks, such as one or more local networks associated with a power plant or process plant control system. A wide variety of Fieldbus devices may be utilized as desired in various embodiments of the invention. Examples of Fieldbus devices include but are not limited to sensors, gauges, measurement devices, valves, actuators, input/output subsystems, host systems, linking devices, suitable Fieldbus H1 devices, and/or suitable Fieldbus high-speed Ethernet (HSE) devices. In certain embodiments, H1 devices may operate and/or communicate at a relatively low bandwidth or data rate, while HSE device may operate at a relatively higher data rate. As one example, H1 devices may operate at approximately 31.25 kilobits per second, and HSE devices may operate at approximately 100 megabits per second.

As desired, communications between Fieldbus devices may be facilitated by utilizing a Fieldbus protocol. The Fieldbus protocol is an all-digital serial, two-way communication protocol that provides a standardized physical interface to a bus or network interconnecting field equipment or Fieldbus devices. The Fieldbus protocol is an open-architecture protocol developed and administered by the Fieldbus Foundation. The Fieldbus protocol provides, in effect, a local area network for field instruments or field devices within a plant or facility, which enables these field devices to perform control functions at locations distributed throughout the facility and to communicate with one another before and after the performance of these control functions to implement an overall control strategy. Because the Fieldbus protocol enables control functions to be distributed throughout a process control network, it may reduce the workload of a central controller.

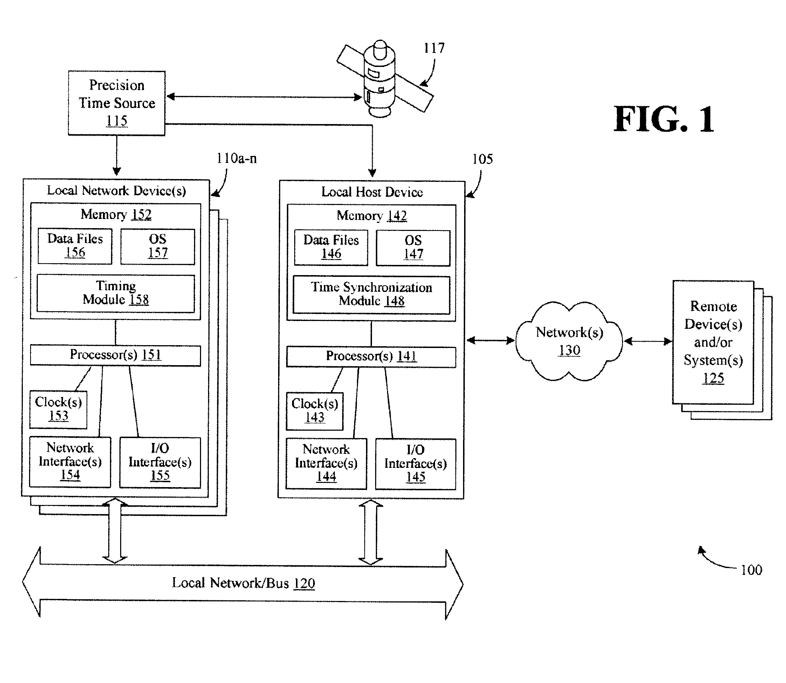

FIG. 1 is a schematic block diagram of one example system 100 that may be utilized to provide time synchronization within a network, such as a local network, according to an illustrative embodiment of the invention. The control system 100 may include at least one network host device 105, any number of other network devices 110a-n, and a time source 115. As desired, the network host device 105 and other network devices 110a-n may be in communication with one another via a suitable local network or local bus 120. In this regard, the network host device 105 and other network devices 110a-n may form a local network or local area network, for example, a local network situated in a power plant or process plant. In certain embodiments, the network devices 110a-n may be configured to monitor various equipment and/or systems in a power plant or process plant. Measurements data and/or other monitoring data collected by the network devices 110a-n may then be communicated to the network host device 105. As desired, the network host device 105 may communicate at least a portion of the data received from other devices 110a-n to one or more remote devices and/or systems 125, such as a central controller associated with the plant and/or other network host devices associated with other local networks. Communications between the network host device 105 and one or more remote devices 125 may be facilitated vie any number of suitable networks, such as the network 130 discussed in greater detail below.

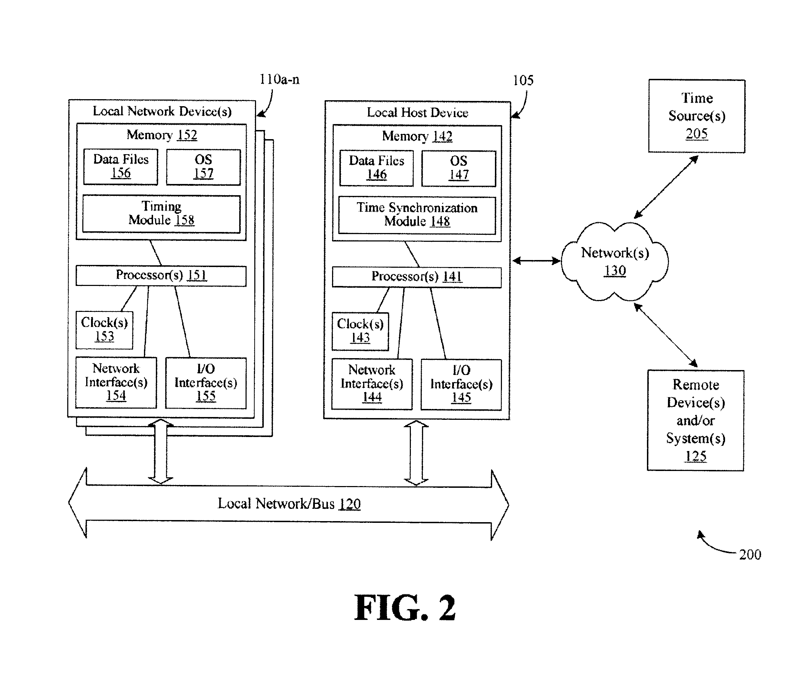

According to an aspect of the invention, the network host device 105 may include, incorporate, or be in communication with the time source 115. The time source 115 may be configured to generate and/or maintain a relatively accurate and/or precise time signal that indicates a current time. For example, the time source 115 may be configured to maintain a time signal having a resolution of approximately one (1) microsecond, although time signals with other resolutions may be utilized. A wide variety of suitable time sources 115 may be utilized as desired in various embodiments of the invention. In one example embodiment, the time source 115 may include a global positioning system (GPS) time source that is operable or configured to communicate with one or more GPS satellites 117 in order to generate a relatively accurate time signal. The time source 115 may establish contact with a desired number of satellites 117 and establish or generate a time signal once contact has been made. As desired, a GPS time source may be incorporated into the network host device 105 or communicatively coupled to the host device 105. Although a GPS time source is described with reference to FIG. 1, other suitable time sources may be utilized. For example, as discussed in greater detail below with reference to FIG. 2, the network host device 115 may communicate with one or more remote devices and generate or establish a suitable time signal via Ethernet based packet switching. The network host device 115 may have a relatively higher bandwidth than one or more of the other network devices 110a-n, thereby permitting the host device 115 to receive and/or maintain a relatively accurate time signal via packet switching technology and communications. In this regard, the network host device 115 may serve as a time source in the system 100.

According to an aspect of the invention, the time source 115 may be configured to output a reference signal at one or more designated times. In certain embodiments, one or more designated times may be established or determined utilizing any number of parameters received by and/or stored by the time source 115, such as default parameters and/or parameters received from the network host device 105. For example, the time source 115 may receive an instruction or request from the network host device 105 to output a reference signal at one or more designated times. As another example, the time source may be configured to periodically output a reference signal at designated times, such as once a second, once every ten seconds, etc. Once a designated time is reached, the time source 115 may output a suitable reference signal for receipt by one or more other components of the system 100, such as the host device 105 and/or the other network devices 110a-n. A wide variety of suitable reference signals may be output by the time source 115 as desired in various embodiments, such as a pulse signal or other synchronization signal. In certain embodiments, the reference signal may be output onto a designated signal line for propagation to other components, such as a designated line within the local network or bus 120. In other embodiments, the reference signal may be superimposed onto another signal that is propagated through the local network or bus 120. As desired, the output reference signal may be directly communicated to a recipient or indirectly communicated to a recipient through one or more other components, such as the network host device 105.

The network host device 105 or local host device may be or include any number of suitable computer processing components that facilitate the management of any number of other devices 110a-n connected in a local network and/or the communication with one or more remote devices 125. For example, the network host device 105 may include one or more controllers, processing devices, and/or processing components that are configured to initialize or establish communications with a time source 115, identify a designated time at which a reference signal will be output by a time source 115, communicate the designated time to one or more other network devices 110a-n via a suitable local network or bus 120, receive data from another network device 110a-n, and/or communicate at least a portion of the data received from another network device 110a-n to a remote device 125. Examples of suitable processing devices that may be incorporated into a network host device 105 include, but are not limited to application specific circuits, programmable logic arrays, microcontrollers, minicomputers, other computing devices, and the like. As such, the network host device 105 may include any number of processors 141 or processing components that facilitate the execution of computer-readable instructions to control the operations of the host device 105 and/or communications between various components of the local network and/or remote devices 125. By executing computer-readable instructions associated with the communication of a designated time to other network devices 110a-n, the host device 105 may include or form a special purpose computer or special purpose machine that facilitates the synchronization of network devices within the local network and/or relatively accurate SOE timing.

In addition to one or more processor(s) 141, the network host device 105 may include one or more memory devices 142, one or more clocks 143 or timing components, one or more network interfaces 144, and/or one or more I/O interfaces 145. The one or more memory devices 142 or memories may be any suitable memory devices for example, caches, read only memory devices, random access memory devices, magnetic storage devices, etc. The one or more memory devices 142 may store data, executable instructions, and/or various program modules utilized by the host device 105, for example, data files 146, an operating system 147, and/or a time synchronization module 148 or time synchronization application. The data files 146 may include stored data associated with the operation of the host device 105, stored data associated with the operation of the time source 115, time synchronization data, stored data associated with the operation of one or more other network devices 110an, measurements and/or readings taken by and received from other network devices 110a-n, stored SOE data, and/or stored data associated with the operations of one or more remote devices 125 and/or communications with remote devices 125.

In certain embodiments of the invention, the network host device 105 may include any number of software applications that are executed to facilitate the operations of the host device 105. The software applications may include computer-readable instructions that are executable by the one or more processors 141. The execution of the computer-readable instructions may form a special purpose computer that facilitates the time synchronization of the various network components 110a-n and/or the communication of SOE timing data to one or more remote devices 125. As an example of a software application, the host device 105 may optionally include an operating system ("OS") 147 that controls the general operation of the host device 105 and that facilitates the execution of additional software applications.

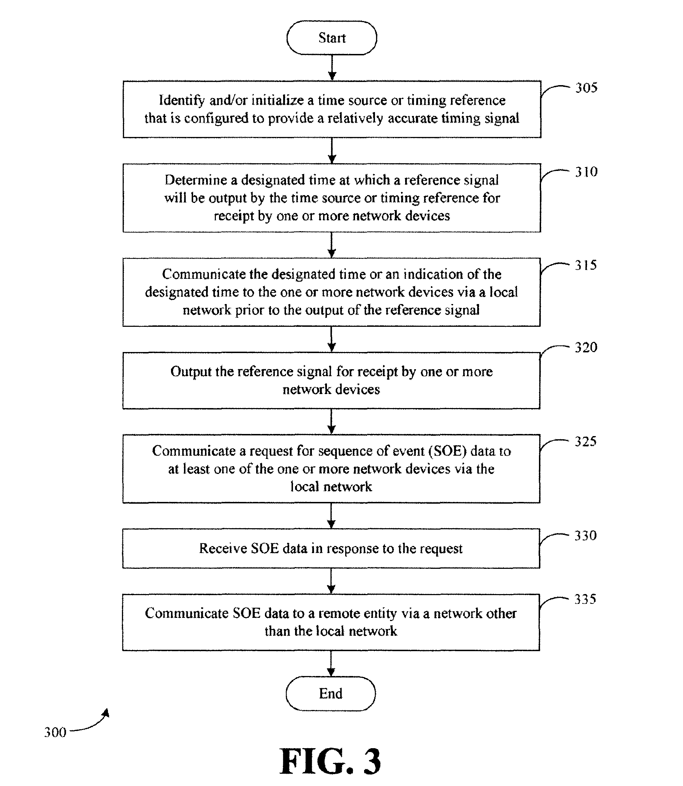

Additionally, the host device 105 may include a time synchronization module 148 that is operable to, configured to, or programmed to facilitate time synchronization of the network devices 110a-n with each other and with one or more remote devices 125. One example of the operations that may be performed by the time synchronization module 148 is described in greater detail below with reference to FIG. 3. The time synchronization module 148 may identify and/or initialize the time source 115. The module 148 may then identify or determine a next designated time at which a reference signal will be output by the time source 115, and the time synchronization module 148 may direct the communication of the next designated time or an indication of the next designated time to one or more other network devices 110a-n. In this regard, when a reference signal is output by the time source 115, the other network devices 110a-n may update their internal time signals or clocks such that the devices 110a-n are synchronized or nearly synchronized.

Additionally, as desired, the time synchronization module 148 may receive and/or process time-stamped data and/or SOE data from one or more other network devices 110a-n. In certain embodiments, the data may be received in response to one or more requests for data that are communicated to other network devices 110a-n. The time synchronization module 148 may direct the communication of requests as desired. Additionally, received data may be stored by the network host device 110 and/or communicated to one or more remote devices 125. As one example, a request for SOE data may be communicated to one or more Fieldbus devices, and SOE data may be received from the Fieldbus devices via a suitable Fieldbus network. The SOE data may then be communicated to a central controller associated with a power plant or process plant.

In certain embodiments, the time synchronization module 148 may be operable to, configured to, or programmed to generate, receive, and/or maintain a time signal that may be utilized to synchronize other network devices 110a-n. For example, the time synchronization module 148 may establish and maintain a relatively accurate time signal utilizing Ethernet based packet switching communications with one or more remote devices 125, such as a central controller associated with a power plant or process plant. One example of a suitable method that may be utilized to establish and maintain a time signal via Ethernet based packet switching communications is set form in the IEEE 1588 standard, which is published by the Institute of Electrical and Electronics Engineers. Once a time signal has been established by the time synchronization module 148, the module 148 may determine a designated time at which a reference signal, such as a pulse signal, will be output for receipt by other network devices 110a-n. The time synchronization module 148 may further be configured to output a suitable reference signal once a value of the established time signal reaches the designated time.

With continued reference to the network host device 105, the one or more clocks 143 may include any suitable clocks or timing devices that facilitate timing within the host device 105. A wide variety of different types of clocks and/or clock generators may be utilized as desired in various embodiments of the invention, for example, quartz piezo-electric oscillators, other resonant circuits, and/or other suitable clock generators. Additionally, a wide variety of different clock signals may be utilized, such as a square wave clock signal.

The one or more network interfaces 144 may facilitate connection of the host device 105 to any number of networks, such as a local network 120 and/or one or more networks 130 that facilitate communication with remote devices 125. In this regard, the host device 105 may receive data from and/or communicate data to other components of the system 100. For example, data associated with a designated time may be received from the time source 115 and communicated to other network devices 110a-n. As another example, SOE timing data may be received from other network devices 110a-n and communicated to one or more remote devices 125.

The one or more I/O interfaces 145 may facilitate the receipt of data by a processing component of the network host device 105 via one or more I/O devices, such as serial ports, universal serial bus (USB) ports, other ports, and/or various user input devices (e.g., a keypad, touch screen display, mouse, keyboard, etc.). For example, in certain embodiments, the I/O interfaces 145 may facilitate the receipt of data from the time source 115.

With continued reference to FIG. 1, any number of network devices 110a-n may be included in the system. An example network device (referred to generally as device 110), such as a H1 Fieldbus device or other relatively low bandwidth device, will now be described. The network device 110 or local network device may be or include any number of suitable computer processing components or processing devices that facilitate the general operation of the device 110, the maintenance of a timing signal, communication with other devices via a local network 120 and/or dedicated signal lines, and/or the synchronization or updating of a timing signal. Examples of suitable processing components devices or components that may be incorporated into a network device 110 include, but are not limited to application specific circuits, programmable logic arrays, microcontrollers, minicomputers, other computing devices, and the like. As such, the network device 110 may include any number of processors 151 or processing components that facilitate the execution of computer-readable instructions to control the operations of the network device 110 and/or communications with other devices via the local network 120 and/or any number of dedicated signal lines. By executing computer-readable instructions associated with the maintenance of a timing signal, the network device 110 may include or form a special purpose computer or special purpose machine that facilitates the synchronization of the network device 110 with other devices within a local network and/or other networks. Additionally, the network device 110 may include or form a special purpose computer or special purpose machine that facilitates relatively accurate SOE timing.

In addition to one or more processor(s) 151, the network device 110 may include one or more memory devices 152, one or more clocks 153 or timing components, one or more network interfaces 154, and/or one or more I/O interfaces 155. The one or more memory devices 152 or memories may be any suitable memory devices for example, caches, read only memory devices, random access memory devices, magnetic storage devices, etc. The one or more memory devices 152 may store data, executable instructions, and/or various program modules utilized by the network device 110, for example, data files 156, an operating system 157, and/or a timing module 158 or timing application. The data files 156 may include stored data associated with the operation of the network device 110, stored measurements data and/or calculations generated by the network device 110, stored data associated with the network host device 105 and/or communications with the host device 105, and/or stored data associated with time synchronization of the network device 110.

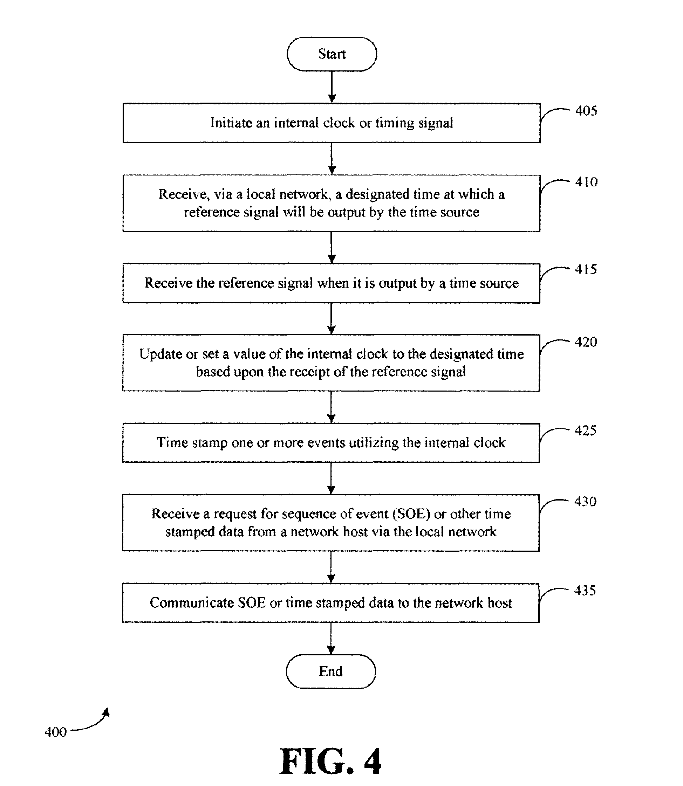

In certain embodiments of the invention, the network device 110 may include any number of software applications or other programmable logic included computer-readable instructions that are executed to facilitate the operations of the network device 110. As an example of a software application, the network device 110 may optionally include an operating system ("OS") 157 that controls the general operation of the device 110 and that facilitates the execution of additional software applications. Additionally, the network device 110 may include a timing module 158 that is operable to, configured to, or programmed to facilitate time synchronization of the network device 110 with other devices and/or SOE timing. One example of the operations that may be performed by the timing module 158 is described in greater detail below with reference to FIG. 4. The timing module 158 may be configured to initialize an internal timing signal or clock 153 for the network device 110. The timing module 158 may further be configured to receive a designated time, next designated time, or an indication thereof from another network component, such as the network host 105. The timing module 158 may store the designated time in memory 152. The timing module 158 may further be configured to receive a reference signal that is output by the time source 115. The reference signal may be received via any number of suitable communications techniques, such as via one or more dedicated signal lines, via superimposing or otherwise adding the reference signal to another signal, etc. Once the reference signal is received, the timing module 158 may access the designated time and set or update a value of the internal clock 153 to the value of the designated time. In this regard, relatively accurate time synchronization of the network device 110 with other devices may be facilitated.

Additionally, the timing module 158 and/or other modules or applications associated with the network device 110 may be configured or programmed to time-stamp various events and/or measurements that are identified, observed, or taken by the network device 110. For example, the timing module 158 may time stamp a measurement taken within a power plant or process plant that exceeds a threshold or falls outside of a designated range. As desired, time-stamped data may be stored by the network device 110 and/or communicated to other devices, such as the network host device 105, via the local network 120. The time-stamped data may be pushed to another device without being requested and/or communicated to the another device in response to a request. In this regard, relatively accurate time stamped SOE data may be maintained by the network device 110 and/or communicated to other components of the system 100.

With continued reference to the network device 110, the one or more clocks 153 may include any suitable clocks or timing devices that facilitate timing within the device 110. A wide variety of different types of clocks and/or clock generators may be utilized as desired in various embodiments of the invention, for example, quartz piezo-electric oscillators, other resonant circuits, and/or other suitable clock generators. Additionally, a wide variety of different clock signals may be utilized, such as a square wave clock signal.

The one or more network interfaces 154 may facilitate connection of the network device 110 to any number of networks, such as the local network 120. In this regard, the network device 110 may receive data from and/or communicate data to the host device 105 and/or other network devices. The one or more I/O interfaces 155 may facilitate the receipt of data by a processing component of the network device 110 via one or more I/O devices, such as serial ports, universal serial bus (USB) ports, other ports, and/or various user input devices (e.g., a keypad, touch screen display, mouse, keyboard, etc.).

The local network or bus 120 may include any suitable local network or combination of networks that facilitates communications between a local host device 105, any number of local network devices 110a-n, and/or a time source 115. Examples of suitable networks or buses include a Foundation Fieldbus bus or other combination of signal lines that form a local network, a radio frequency (RF) network, a Bluetooth™ enabled network, etc. Additionally, as desired, the local network may include any suitable wired network, wireless network, and/or combination of wired or wireless networks. According to an aspect of the invention, the local network 120 may facilitate communication between any number of relatively low bandwidth devices.

The one or more networks 130 that facilitate communications between the network host device 105 and/or remote devices 125 or systems may include any suitable communications network or combination of networks. Examples of suitable networks include, but are not limited to, a local area network, a wide area network, an Ethernet enabled network, the Internet, a radio frequency (RF) network, a Bluetooth™ enabled network, any suitable wired network, any suitable wireless network, or any suitable combination of wired and wireless networks. In certain embodiments of the invention, such as embodiments that utilize an Ethernet network, one or more Ethernet switches may be provided to route data within the network 130. Examples of suitable Ethernet switches include, but are not limited to, network bridges, multilayer switches, etc.

The one or more remote devices 125 and/or systems may include any number of remote devices and/or systems that are configured to directly or indirectly communicate with the network host device 105 via one or more networks 130. For example, in a power plant or process plant, the remote devices 125 may include a central controller associated with the power plant, such as a Mark™ VI control or a Mark™ Vie control system produced by the General Electric Company. The remote devices 125 may additionally or alternatively include other network host devices associated with other local networks situated within the power plant or process plant.

FIG. 2 is a schematic diagram of another example system 200 that may be utilized to provide time synchronization within a local network, accordance to an illustrative embodiment of the invention. The system 200 of FIG. 2 may include similar components to the system 100 illustrated in FIG. 1; however, the system 200 may include one or more time sources 205 or timing devices that are in communication with a network host device 105 via the one or more suitable networks 130.

The network host device 105 may have a bandwidth that is relatively higher than other network devices 110a-n, and the relatively higher bandwidth may facilitate that receipt of a relatively accurate timing signal or time synchronization data by the host device 105 via a network 130. For example, Ethernet-based communications, such as packet switching communications between the network host device 105 and a time source 205 or other devices may facilitate the establishment of a relatively accurate timing signal at the host device 105. As one example, the methodology set forth in the standard IEEE 1588 may be utilized to establish a timing signal at the host device 105. In one embodiment, the network host device 105 may include a HSE Foundation Fieldbus device that is capable of Ethernet-based time synchronization.

Once a time signal has been established by the network host device 105, the host device 105 may determine one or more designated times and communicate a designated time or indication thereof to the other network devices 110a-n. The network host device 105 may then output a reference signal when a designated time is reached in order to facilitate time synchronization within the local network 120. In this regard, the network host device 105 of FIG. 2 may perform similar operations as those of the time source 115 of FIG. 1.

As desired, embodiments of the invention may include a system with more or less than the components illustrated in FIGS. 1 and 2. The systems 100, 200 of FIGS. 1 and 2 are provided by way of example only.

FIG. 3 is a flow chart of one example method 300 for providing time synchronization, according to an illustrative embodiment of the invention. The operations set forth in the method 300 are one example of the operations that may be performed by a time synchronization module and/or network host device within a local network, such as the time synchronization module 148 and/or host device 105 illustrated in FIGS. 1 and 2. The method 300 may begin at block 305.

At block 305, a time source or timing reference that is configured to provide or generate a relatively accurate timing signal may be identified or initialized. A wide variety of suitable time sources may be identified as desired in various embodiments of the invention. In one example embodiment, a GPS time source, such as the time source 115 illustrated in FIG. 1, may be identified and/or initialized. In another example embodiment, a timing reference may be established at the host device 105 utilizing suitable network based synchronization techniques, such as an Ethernet-based packet switching synchronization technique.

At block 310, a designated time or next designated time at which a reference signal will be output by a time source may be identified or determined. The designated time may be a future point in time at which a reference signal may be output, such as a particular second or particular minute at which a reference signal will be output. In embodiments in which the host device 105 functions as the time source, the designated time may be established by the host device 105. In embodiments in which a time source is separate or distinct from the host device 105, such as embodiments including a GPS time source, the designated time may be determined and/or established by the host device 105 via one or more suitable communications with the time source. For example, a request for a next designated time may be communicated to the time source, and a designated time may be received in response to the request. As desired, one or more designated times or parameters for outputting reference signals may be communicated by the host device 105 to a time source.

Once a designated time or next designated time is identified or determined at block 310, the designated time or an indication thereof may be communicated to one or more other network devices, such as network devices 110a-n illustrated in FIG. 1, via a local network. For example, a host device within a local Foundation Fieldbus network may communicate the designated time to one or more other Fieldbus devices over a suitable local network or bus, such as the local network 120 illustrated in FIG. 1. According to an aspect of the invention, the designated time may be communicated to the other devices 110a-n prior to the output of the reference signal by a time source. At block 320, which may be optional in certain embodiments of the invention, the network host device 105 may output a reference signal for receipt by other network devices 110a-n once the designated time is reached. For example, in embodiments in which the host device 105 additionally operates as a time source or establishes a timing reference signal, the host device 105 may output a reference signal. As another example, a host device 105 may receive an indication from a separate time source that the designated time has been reached, and the host device 105 may output a reference signal in response to the receipt of the indication. A reference signal may be output utilizing a wide variety of suitable techniques and/or network components. In certain example embodiments, a reference signal may be output onto one or more designated signal lines that facilitate communication of the reference signal to the other devices 110a-n. For example, a dedicated signal line for the reference signal may be added to a local network 120 or bus. In other example embodiments, a reference signal may be superimposed or otherwise added to another signal that is propagated or communicated to the other devices 110a-n via a local network 120.

According to an aspect of the invention, the output reference signal may facilitate time synchronization of the other network devices 110a-n. When the reference signal is received by another device 110a-n, an internal clock or timing signal of the other device 110a-n may be set or update to the value of the previously received designated time. In this regard, relatively accurate time synchronization may be achieved within relatively low bandwidth devices. By establishing relatively accurate time synchronization, relatively accurate SOE timing data may be obtained within a local network 120 and/or with other devices. For example, relatively accurate SOE timing data may be obtained at a power plant or process plant that includes a central controller and any number of distributed local networks that include relatively low bandwidth devices.

At block 325, which may be optional in certain embodiments of the invention, the host device 105 may communicate a request for SOE data to at least one of the one or more other network devices 110a-n via the local network. At block 330, SOE data may be received from another device 110a-n in response to the request. Alternatively, SOE data may be received by the host device 105 without a request being communicated by the host device 105. Received SOE data may then be communicated by the host device 105 to one or more remote devices, systems, or entities, such as the remote devices 125 illustrated in FIG. 1, via a network other than the local network 120.

As one example, a host device associated with a local network that includes relatively low bandwidth devices may collect SOE data. The host device, which may have a relatively higher bandwidth, may then communicate at least a portion of the collected SOE data to one or more remote device, such as a central controller and/or other network host devices. As one example, the host device may be a HSE Fieldbus device that collects data from any number of H1 Fieldbus devices, and the host device may then communicate collected data to a central controller associated with a power plant or process plant.

### The method 300 may end following block 335.

FIG. 4 is a flow chart of another example method 400 for providing time synchronization, according to an illustrative embodiment of the invention. The operations set forth in the method 400 are one example of the operations that may be performed by a timing module and/or network device within a local network, such as the timing module 158 and/or network device 110 illustrated in FIGS. 1 and 2. The method 400 may begin at block 405.

At block 405, an internal clock or timing signal may be initiated or begun. The value of the internal clock may be a coarse time value that has not been synchronized with one or more other components in a network. Accordingly, the value of the internal clock may include certain error or inaccuracy.

At block 410, a designated time or an indication of a designated time at which a reference signal will be output by a time source may be received. In certain embodiments, the designated time may be received via from a host device, such as the host device 105 illustrated in FIG. 1, via a local network, such as the local network 120 illustrated in FIG. 1. The designated time may specify a particular time, such as a particular second or particular minute, at which a reference signal will be output be a time source. As desired, the designated time may be stored in a suitable memory or register.

At block 415, a reference signal that has been output by the time source may be received. A wide variety of suitable types of reference signals may be received as desired in various embodiments of the invention, such as a pulse signal. In certain embodiments, the reference signal may be received from a time source or host device via one or more designated signal lines, such as a signal line that has been added to a local network or local bus. In other embodiments, the reference signal may be superimposed or otherwise added to another signal, and the reference signal may be identified, parsed from, or extracted from the other signal via any number of suitable filters.

Based upon the receipt of the reference signal at block 415, a value of the internal clock or internal timing signal may be set or updated to the previously received designated time at block 420. In this regard, the internal clock may be synchronized with the internal clocks of other network devices. The operations of receiving a designated time, receiving a reference signal, and updated or setting a clock may be repeated as desired in various embodiments in order to maintain a desired accuracy of the internal clock. Additionally, in certain embodiments, a next designated time may be determined by a network device utilizing a previous designated time. For example, a reference signal may be output be a time source in a periodic manner, such as once every second. Following the receipt of a reference signal, a stored value of the designated time may be incremented by a predetermined period (e.g., one second). Accordingly, the internal clock may be accurately updated upon receipt of a subsequent reference signal. In addition to internally updating a next designated time, a network device 110 may periodically (e.g., once every ten seconds, once every thirty seconds, once a minute, etc.) receive a new designated time from the network host device 105 that may be utilized to verify or update a stored value of a next designated time. In this regard, any error generated by failing to update a designated time and/or failing to identify a reference signal may be corrected.

According to an aspect of the invention, the internal clock may be utilized to time stamp certain events and/or measurements identified by a network device 110. In this regard, relatively accurately SOE timing may be generated and/or maintained within a distributed system. For example, at block 425, one or more events may be time stamped or clocked utilizing the internal clock. As desired, time stamped data or other indicators of the time stamped events may be communicated to a network host device 105 via the local network 120. For example, at block 430, which may be optional in certain embodiments of the invention, a request for SOE timing data or other time stamped data may be received from a network host device 105. SOE or other time stamped data may then be communicated to the network host device 105 at block 435.

### The method 400 may end following block 435.

The operations described in the methods 300, 400 of FIGS. 3 and 4 do not necessarily have to be performed in the order set forth in FIGS. 3 and 4, but instead may be performed in any suitable order. Additionally, in certain embodiments of the invention, more or less than all of the elements or operations set forth in FIGS. 3 and 4 may be performed.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer readable program code or program instructions embodied therein, said computer readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the preferred mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a time source configured to determine a current time and a designated time at which a reference signal will be output, and to output the reference signal when the designated time is reached;
   a network host communicatively coupled to the time source and configured to (i) identify the designated time and (ii) communicate the identified designated time to one or more network devices via a local network,
   wherein the one or more network devices are respectively configured to (i) initiate an internal clock, (ii) receive the designated time from the network host, (iii) receive the reference signal output be the time source subsequent to receiving the designated time, and (iv) set a value of the internal clock to the designated time upon receipt of the reference signal.
2. The system of clause 1, wherein the time source comprises a global positioning system (GPS) time source.
3. The system of any preceding clause, wherein:
   the network host comprises the time source, and
   the network host is further configured to receive at least one time signal from a remote entity.
4. The system of any preceding clause, wherein the at least one time signal comprises an Ethernet based time synchronization signal.
5. The system of any preceding clause, wherein the one or more network devices comprise at least one of a Foundation Fieldbus H1 device or a low bandwidth network device.
6. The system of any preceding clause, wherein the reference signal comprises a pulse signal output by the time source in a periodic manner.
7. The system of any preceding clause, wherein the reference signal is received by the one or more network devices via one or more dedicated signal lines.
8. A method for providing time synchronization in a local network, the method comprising:
   identifying, by a network host device, a time source that is configured to output a reference signal at a designated time;
   determining, by the host device, the designated time at which the reference signal will be output by the time source; and
   communicating, by the host device to one or more network devices via a local network and prior to the designated time, an indication of the designated time,
   wherein the one or more network devices are respectively configured to receive the indication and set, upon a subsequent receipt of the reference signal from the time source, a value of an internal clock to the designated time.
9. The method of any preceding clause, wherein identifying a time source comprises identifying a global positioning system (GPS) time source.
10. The method of any preceding clause, wherein identifying a time source comprises:
   identifying a remote entity in network communication with the host device; and
   receiving, by the host device from the remote entity, at least one time signal.
11. The method of any preceding clause, wherein receiving at least one time signal comprises receiving an Ethernet based time synchronization signal.
12. The method of any preceding clause, wherein communicating an indication of the designated time to one or more network devices comprises communicating an indication to one or more Foundation Fieldbus H1 devices or to one or more low bandwidth network devices.
13. The method of any preceding clause, further comprising:
   communicating, from the host device to the one or more network devices, the reference signal.
14. The method of any preceding clause, wherein communicating the reference signal comprises communicating the reference signal via one or more dedicated signal lines.
15. A method for providing time synchronization in a network, the method comprising:
   initiating, by a network device, an internal timing signal;
   receiving, by the network device via a local network, an indication of a designated time at which a reference signal will be output by a time source;
   receiving, by the network device from the time source and subsequent to receiving the indication, the reference signal; and
   setting, based at least in part on receiving the reference signal, a value of the internal timing signal to the designated time.
16. The method of any preceding clause, wherein receiving an indication comprises receiving an indication from a network host.
17. The method of any preceding clause, wherein receiving the reference signal comprises receiving the reference signal from one of a time source or a network host.
18. The method of any preceding clause, wherein receiving the reference signal comprises receiving the reference signal via a dedicated signal line.
19. The method of any preceding clause, further comprising:
   time stamping at least one event utilizing the internal timing signal; and communicating, via the local network to a network host, information associated with the time stamped at least one event.
20. The method of any preceding clause, further comprising:
   receiving, via the local network from the network host, a request for the information,
   wherein the information is communicated to the network host in response to the received request.

## Claims

1. A system (100) comprising:
a time source (115,205) configured to determine a current time and a designated time at which a reference signal will be output, and to output the reference signal when the designated time is reached;
a network host(105) communicatively coupled to the time source (115,205) and configured to (i) identify the designated time and (ii) communicate the identified designated time to one or more network devices (110a-n) via a local network (120),
wherein the one or more network devices (110a-n)are respectively configured to (i) initiate an internal clock (153), (ii) receive the designated time from the network host (105), (iii) receive the reference signal output be the time source (115,205) subsequent to receiving the designated time, and (iv) set a value of the internal clock (153) to the designated time upon receipt of the reference signal.

2. The system (100) of Claim 1, wherein the time source (115,205) comprises a global positioning system (GPS) time source (117).

3. The system (100) of any preceding Claim, wherein:
the network host (105) comprises the time source, and
the network host (105) is further configured to receive at least one time signal from a remote entity.

4. The system (100) of Claim 3, wherein the at least one time signal comprises an Ethernet based time synchronization signal.

5. The system (100) of any preceding Claim, wherein the one or more network devices (110a-n) comprise at least one of a Foundation Fieldbus H1 device or a low bandwidth network device.

6. The system (100) of any preceding Claim, wherein the reference signal comprises a pulse signal output by the time source (115,205) in a periodic manner.

7. The system (100) of any preceding Claim, wherein the reference signal is received by the one or more network devices (110a-n) via one or more dedicated signal lines.

8. A method (300) for providing time synchronization in a local network (120), the method (300) comprising:
identifying (305), by a network host device (105), a time source (115,205) that is configured to output a reference signal at a designated time;
determining (310), by the host device (105), the designated time at which the reference signal will be output by the time source (115,205); and
communicating (315), by the host device (105) to one or more network devices (110a-n) via a local network (130) and prior to the designated time, an indication of the designated time,
wherein the one or more network devices (110a-n) are respectively configured to receive the indication and set, upon a subsequent receipt of the reference signal from the time source, a value of an internal clock (153) to the designated time.

9. The method (300) of Claim 8, wherein identifying a time source comprises identifying a global positioning system (GPS) time source (117).

10. The method (300) of Claim 8 or Claim 9, wherein identifying (305) a time source (115,205) comprises:
identifying a remote entity in network communication with the host device (105); and receiving, by the host device (105) from the remote entity, at least one time signal.

11. The method (300) of Claim 10, wherein receiving at least one time signal comprises receiving an Ethernet based time synchronization signal.

12. The method (300) of any of Claims 8 to 11, wherein communicating (315) an indication of the designated time to one or more network devices (110a-n) comprises communicating an indication to one or more Foundation Fieldbus H1 devices or to one or more low bandwidth network devices.

13. The method (300) of any of Claims 8 to 12, further comprising:
communicating (320), from the host device (105) to the one or more network devices (110a-n), the reference signal.

14. The method (300) of Claim 13, wherein communicating (320) the reference signal comprises communicating the reference signal via one or more dedicated signal lines.
